# EUROPÄISCHE PATENTSCHRIFT

(11) **EP 2 714 313 B1**
(45) Veröffentlichungstag und Bekanntmachung des Hinweises auf die Patenterteilung: **03.05.2017**
(21) Anmeldenummer: 12742776.3
(22) Anmeldetag: 29.05.2012
(51) Int. Cl.: B23D 35/00

(54) **SCHERMESSER MIT MESSEREINSATZ**
SHEARING BLADE HAVING A BLADE INSERT
LAME DE COUPE À INSERT

(30) Priorität: 27.05.2011 AT 7822011
(43) Veröffentlichungstag der Anmeldung: 09.04.2014
(73) Patentinhaber: Weber-Hydraulik GmbH, 4460 Losenstein (AT)
(72) Erfinder: STROHMEIER, Kurt, A-4421 Aschach (AT); HERWIG, Peter, 98593 Floh-Seligenthal (DE)
(74) Vertreter: Burger, Hannes
(86) Internationale Anmeldenummer: PCT/AT2012/050075
(87) Internationale Veröffentlichungsnummer: WO 2012/162714

(56) Entgegenhaltungen:
- WO-A1-2007/030077
- DE-C- 624 096
- DE-U1- 9 207 522
- GB-A- 191 411 477
- JP-A- 2003 001 518

## Beschreibung

Die Erfindung betrifft ein Schermesser gemäß dem Oberbegriff des Anspruches 1. Ein derartiges Schermesser wird durch das Dokument GB 11477A A.D. 1914 offenbart. Bei Schneidgeräten besteht eine bekannte Ausführungsform darin, die Schermesser so auszubilden, dass sie einen Schermesser-Grundkörper und einen an diesem angeordneten oder eingesetzten Messereinsatz umfassen. Insbesondere bei Schneidgeräten, die für Bergungseinsätze oder Abbrucharbeiten verwendet werden, sind die Schermesser rauen Einsatzbedingungen ausgesetzt. Deshalb sind die Schermesser-Grundkörper vorzugsweise aus zähem Material hergestellt, während die Messereinsätze vorzugsweise durch ein hartes Material mit guter Schneidwirkung und geringem Verschleiß gebildet sind. Im Fall einer Beschädigung der Schneidkante muss bei einer derartigen Ausführung nicht das gesamte Schermesser getauscht werden, sondern es genügt, wenn der schadhafte Messereinsatz getauscht wird. Lediglich den Messereinsatz zu tauschen verursacht wesentlich geringere Kosten, als das gesamte Schermesser zu ersetzen, weshalb derartige Schermesser eine wirtschaftlich vorteilhafte Bauart darstellen.

Ein Bergegerät mit einem aus einem Schermesser-Grundkörper und einem darin eingesetzten Messereinsatz aufgebautem Schermesser ist beispielsweise aus DE 20 2004 011 263 U1 oder GB 2 254 580 A bekannt. Die Messereinsätze sind bei diesen Schermessern mittels fünf bzw. drei Befestigungsschrauben am Grundkörper fixiert. Diese Befestigungsweise der Messereinsätze ist jedoch relativ aufwändig, da entweder im Grundkörper oder im Messereinsatz Innengewinde vorzusehen sind und weiters der Wechsel derartiger Messereinsätze umständlich und zeitaufwändig ist, insbesondere wenn an den Befestigungsschrauben durch Verschmutzung oder mechanische Beschädigung im Einsatz die erforderlichen Werkzeuge nicht problemlos angesetzt werden können.

Die Aufgabe der Erfindung besteht darin, die Befestigung eines Messereinsatzes in einem Schermesser-Grundkörper so zu verbessern, dass sowohl die Herstellung der einzelnen Bestandteile als auch der Austausch von Messerelementen erleichtert wird.

Die Aufgabe der Erfindung wird durch ein gattungsgemäßes Schermesser mit den Merkmalen des Anspruches 1 gelöst.

Dadurch, dass der Sitz eine in Richtung quer zur Freifläche wirksame Hinterschneidungsfläche aufweist, die bei eingesetztem Messereinsatz mit einer an diesem ausgebildeten Formschlussfläche zusammenwirkt und dabei ein quer zur Freifläche wirkender Formschluss hergestellt ist und dass der Messereinsatz mittels eines quer zur Freifläche orientierten, in fluchtenden Bohrungen im Grundkörper und im Messereinsatz angeordneten, stiftförmigen Steckverbindungselements am Grundkörper befestigt ist, ergibt sich ein stabiler Sitz des Messereinsatzes am Grundkörper, der ohne Verwendung von Schraubenverbindungen gesichert werden kann und baulich einfach ist.

Die zumindest eine Hinterschneidungsfläche am Grundkörper und/oder die zumindest eine Formschlussfläche am Messereinsatz können sich dabei über den gesamten Rand des Messereinsatzes bzw. des Sitzes im Grundkörper erstrecken oder aber auch nur abschnittsweise ausgeführt sein. Das Steckverbindungselement kann durch ein leicht erhältliches und kostengünstiges Normbauteil gebildet sein und sind weiters die Bohrungen zur Aufnahme des Steckverbindungselements am Grundkörper als auch am Messereinsatz mit geringem Aufwand herstellbar. Da Kräfte quer zur Freifläche hauptsächlich zwischen Formschlussfläche und Hinterschneidungsfläche übertragen werden, ist es kein Nachteil, dass ein Steckverbindungselement nur geringe Zugkräfte übertragen kann, und reicht für eine zuverlässige Fixierung des Messereinsatzes im Schermesser eine geringe Anzahl derartiger Steckverbindungselemente aus. Vorzugsweise wird der Messereinsatz mit lediglich zwei Steckverbindungselementen am Grundkörper festgesetzt. Zum Einbringen eines Steckverbindungselements reicht vorzugsweise die Bohrung am Grundkörper vom Sitz bis zur Außenseite des Grundkörpers und wird das Steckverbindungselement durch den Grundkörper in diesen sowie in den Messereinsatz eingebracht.

Falls die Endabschnitte bzw. die Endstirnflächen des Messereinsatzes Formschlussflächen aufweisen, die mit Hinterschneidungsflächen am Grundkörper zusammenwirken, kann ein Messereinsatz alternativ oder zusätzlich zur Rückseite auch an seinen Enden gegen ein Herausziehen aus dem Sitz am Grundkörper quer zur Freifläche gesichert sein. Die von den Steckverbindungselementen zu übertragenden Kräfte verringern sich dementsprechend.

Insbesondere können die Hinterschneidungsflächen für die Endabschnitte des Messereinsatzes im Querschnitt dasselbe Profil aufweisen, wie die Hinterschneidungsflächen für den Mittelteil des Messereinsatzes. Dadurch kann die Hinterschneidung des Sitzes am Grundkörper sowohl für den Mittelteil des Messereinsatzes als auch für dessen Endabschnitte mit einem einzigen Werkzeug in einer Aufspannung hergestellt werden.

Eine günstige Ausführungsform besteht darin, dass die Hinterschneidungsfläche durch eine halbe Schwalbenschwanznut im Grundkörper gebildet ist und der eingesetzte Messereinsatz einen parallelogrammähnlichen Querschnitt besitzt und die Formschlussfläche zusammen mit einer zur Freifläche etwa parallelen Anlagefläche einen der Schneidkante gegenüberliegenden, spitzwinkeligen Formschlusskeil bildet, der in die Schwalbenschwanznut eingreift und dabei die Hinterschneidungsfläche hintergreift. Eine Formschlussverbindung zwischen Messereinsatz und Grundkörper durch eine schwalbenschwanzartige Verbindung ist fertigungstechnisch leicht herstellbar und besitzt der Formschlusskeil im Grundkörper einen stabilen Sitz und ist gegen ein Herausziehen rechtwinkelig oder quer zur Freifläche gut gesichert. Durch das Steckverbindungselement, dessen Orientierung von der Richtung der Hinterschneidungsfläche abweicht, ist ein Ausgleiten des Messereinsatzes zuverlässig verhindert.

Vorteilhafte Verhältnisse für die Kraftübertragung zwischen Messereinsatz und Grundkörper ist gegeben, wenn der Formschlusskeil einen Keilwinkel zwischen 45° und 80° aufweist.

Eine alternative Ausführungsform des Sitzes ist dadurch gegeben, wenn die Hinterschneidungsfläche durch eine halbe T-Nut im Grundkörper gebildet ist und die Formschlussfläche am Messereinsatz durch einen die T-Nut hintergreifenden Falzansatz gebildet ist. Auch diese Ausführungsform ist fertigungstechnisch relativ einfach herzustellen und ist der Messereinsatz bei eingesetztem Steckverbindungselement quer zur Freifläche gegenüber dem Grundkörper nicht verschiebbar.

Wenn sich die Bohrung zur Aufnahme des Steckverbindungselements im Messereinsatz bis zur Freifläche erstreckt, kann zum Auswechseln des Messereinsatzes das Steckverbindungselement auf einfache Weise von der Freifläche aus her ausgetrieben werden.

Um zu verhindern, dass das das Ende des Steckverbindungselements während des Gebrauchs unbeabsichtigt bis über die Freifläche hinaus aus dem Messereinsatz austreten kann, ist es von Vorteil, wenn die Bohrung im Messereinsatz im Bereich der Freifläche einen kleineren, stufenförmig abgesetzten Durchmesser oder eine andere Einengung im Bohrungsquerschnitt aufweist.

Eine in der Praxis bewehrte und wirtschaftliche Ausführungsform besteht darin, dass das Steckverbindungselement durch einen Spannstift in Form eines hohlen, längsgeschlitzten Stifts gebildet ist. Ein derartiger Spannstift kann durch seine Flexibilität in Durchmesserrichtung Bauteilmaßtoleranzen ausgleichen und ist zur Fixierung des Messereinsatzes am Sitz eine baulich einfache und zuverlässige Lösung. Weiters kann das Steckverbindungselement durch einen Spiralspannstift, einen Kerbstift, oder einen Zylinderstift gebildet sein, wobei alle diese Ausführungsvarianten die Einsparung von Innengewinden an den Bauteilen erlauben.

Eine weitere Erhöhung der Stabilität wird erreich, wenn der Spannstift durch ein in seinem hohlen Inneren eingesetztes weiteres Steckverbindungselement verstärkt ist. Dieses kann von derselben oder aber auch anderer Bauart sein, wie das äußere Steckverbindungselement.

Eine fertigungstechnisch leicht herstellbare Ausführungsform ist gegeben, wenn die Mittelachse des Steckverbindungselements rechtwinkelig zur Freifläche orientiert ist. Dadurch ist das Steckverbindungselement in jedem Fall winkelig zur Hinterschneidungsfläche und sorgt so für die nötige Fixierung des Messereinsatzes. Gleichzeitig kann das Steckverbindungselement allfällig auftretende Scherkräfte quer zu seiner Mittelachse in alle Richtungen übertragen.

Eine gleichmäßige Kraftübertragung zwischen Messereinsatz und Grundkörper wird erzielt, wenn der Sitz am Grundkörper für die Rückseite oder den Rücken des Messereinsatzes im Wesentlichen aus ebenen Flächen gebildet ist. Eine derartige Ausführung des Sitzes kann durch eine geradlinige Fräsbewegung eines entsprechenden Fräsers hergestellt werden und ist dadurch im Mittelteil des Messereinsatzes eine gleichmäßiger Kontakt und eine stabile, flächige Abstützung am Grundkörper sichergestellt.

Wenn sich die Richtung der Mittelachse des Steckverbindungselements um einen Winkel von zumindest 10° von der Richtung der Hinterschneidungsfläche unterscheidet, ist eine ausreichende Fixierung des Messereinsatzes im Sitz gegeben, da eine Verschiebung parallel zur Hinterschneidungsfläche durch den Abscherwiderstand des Steckverbindungselements verhindert ist.

Zum besseren Verständnis der Erfindung wird diese anhand der nachfolgenden Figuren näher erläutert.

Es zeigen jeweils in stark schematisch vereinfachter Darstellung:
- Fig. 1: ein Schneidgerät mit zwei zusammenwirkenden Schermessern mit auswechselbaren Messereinsätzen;
- Fig. 2: einen Querschnitt gemäß Linie II-II in Fig. 3 durch ein Schermesser mit Messereinsatz in einer ersten Ausführungsform;
- Fig. 3: eine Ansicht des Schermessers gemäß Fig. 2 in Richtung III;
- Fig. 4: einen Querschnitt gemäß Linie IV-IV in Fig. 5 durch eine weitere Ausführungsform eines Schermessers mit Messereinsatz;
- Fig. 5: eine Ansicht eines Schermessers gemäß Fig. 4 in Richtung V;
- Fig. 6: eine Detailansicht des Steckverbindungselements im Bereich der Freifläche des Messereinsatzes;
- Fig. 7: eine weitere mögliche Ausführungsform eines Schermessers mit Messereinsatz;
- Fig. 8: eine weitere mögliche Ausführungsform eines Schermessers mit Messereinsatz.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

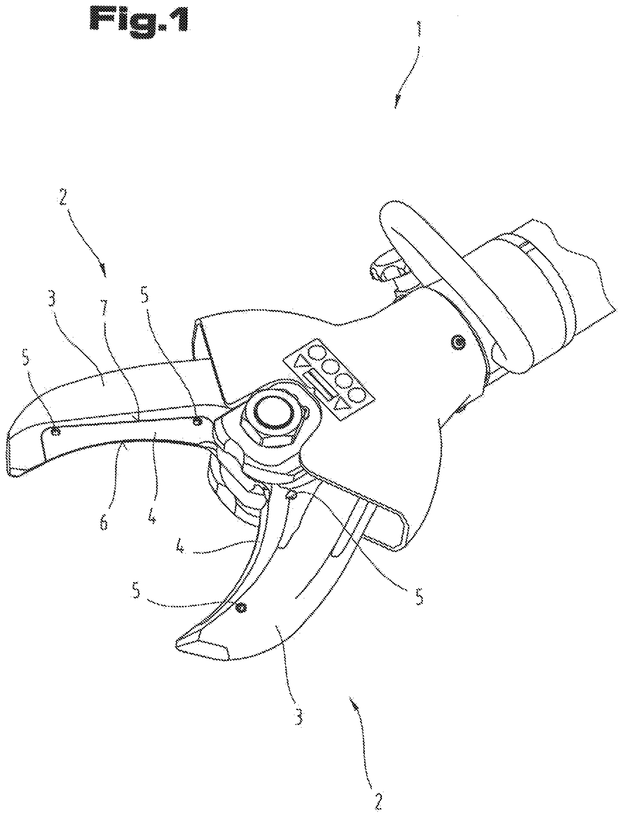

Fig. 1 zeigt in Schrägansicht ein Schneidgerät 1, wie es häufig zur Bergung von verunfallten Personen aus Fahrzeugen oder aber auch für andere Zwecke wie z.B. Abbrucharbeiten eingesetzt wird. Dieses umfasst zwei von einem nicht dargestellten Antrieb, beispielsweise einem Hydraulik-Zylinder, angetriebene Schermesser 2, die an einem Gestell des Schneidgeräts 1 gelenkig angeordnet sind und zum Durchtrennen von vielfältigen Materialien durch Scherschneiden verwendet werden. Die Schermesser 2 umfassen dabei einen Grundkörper 3 mit einem Sitz, an dem ein Messereinsatz 4 angeordnet bzw. eingesetzt ist. Der Sitz weist dabei eine spezielle, anhand von weiteren Figuren erläuterte Ausführungsform mit einer Hinterschneidung auf, die einen Formschluss zwischen Messereinsatz 4 und Grundkörper 3 herstellt und die Messereinsätze 4 sind mittels stiftförmigen Steckverbindungselementen 5 am Grundkörper 3 befestigt.

Im dargestellten Ausführungsbeispiel besitzen die Messereinsätze 4 bzw. die Schermesser 2 gekrümmte Schneidkanten 6, was für den Schneidvorgang Vorteile haben kann. Die Rückseiten 7 der Messereinsätze 4 sind hingegen geradlinig, wodurch eine zuverlässige, gleichmäßige Anlage am Grundkörper 3 erzielt wird. Die Messereinsätze 4 sind vorzugsweise derart in den Grundkörper 3 eingesetzt, dass bündige Übergänge zum Grundkörper 3 gegeben sind.

Der Grundkörper 3 eines Schermessers 2 ist vorzugsweise aus einem zähen Stahl gebildet, der auch harte stoßartige Belastungen ertragen kann. Es ist jedoch auch eine gewichtsparende Ausführung des Grundkörpers aus leichteren Metallen als Stahl denkbar. Der Messereinsatz 4 eines derartigen Schermessers 2 ist hingegen aus einem möglichst harten Material mit guten Schneideigenschaften, wodurch ein Schneiden auch von härteren Materialien ermöglicht wird.

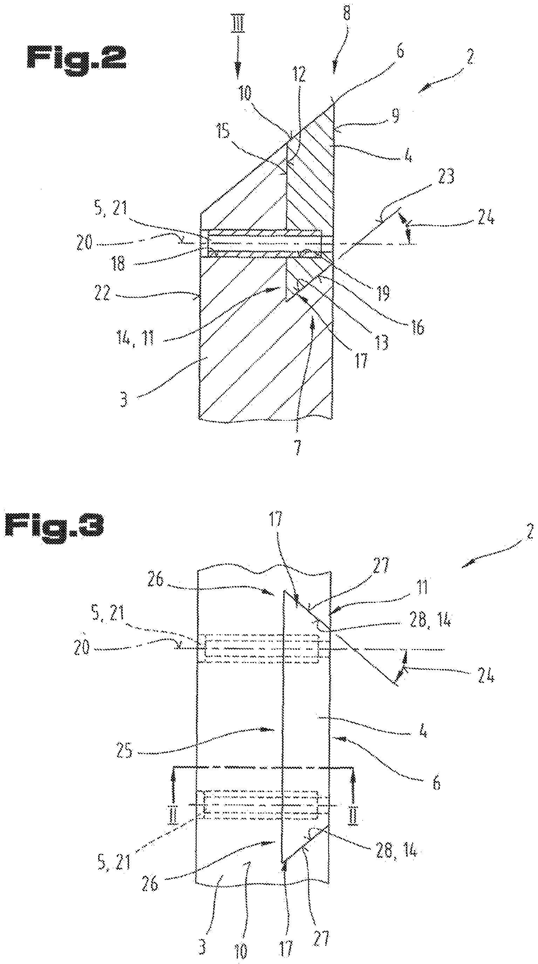

Fig. 2 zeigt ausschnittsweise einen Querschnitt entlang Linie II-II in Fig. 3 durch ein Schermesser 2, bei dem in einem Grundkörper 3 ein Messereinsatz 4 eingesetzt ist. Das in Fig. 3 in Ansicht gemäß Pfeil III in Fig. 2 dargestellte Schermesser 2 kann dieselbe Ausführungsform eines Schermessers 2 wie in Fig. 2 betreffen, jedoch auch eine Ausführungsform, bei der an der Rückseite 7 des Messereinsatzes 4 keine Hinterschneidung vorgesehen ist. Ebenso kann Fig. 2 eine Ausführungsform darstellen, bei der nur an der Rückseite 7 eine Hinterschneidung vorgesehen ist, jedoch nicht an den Enden des Messereinsatzes 4.

Die Schneidkante 6 ist durch einen Schneidkeil 8 gebildet, der seinerseits durch eine Verschneidung einer Freifläche 9 und einer Druckfläche 10 gebildet ist. Bei einem Schneidvorgang wirkt das in Fig. 2 nach oben orientierte Schermesser 2 mit einem nicht dargestellten zweiten Schermesser zusammen, wobei die Freiflächen 9 in geringem Abstand zueinander aneinander vorbei bewegt werden. Die Schneidkeile 8 dringen dabei in einen nicht dargestellten, zu durchschneidenden Gegenstand ein, wobei die Druckflächen 10 auf die Oberfläche des Gegenstandes drücken und in Folge eine Trennung des Gegenstandes erfolgt.

Die Flächen, an denen der Messereinsatz 4 den Grundkörper 3 kontaktiert, bilden einen Sitz 11, wobei im in Fig. 2 dargestellten Ausführungsbeispiel der Sitz 11 eine zur Freifläche 9 etwa parallele Anlagefläche 12 und eine zu dieser spitzwinkelig angeordnete Hinterschneidungsfläche 13 umfasst. Der Sitz 11 entspricht in Fig. 2 einer halben Schwalbenschwanznut 14. Der Messereinsatz 4 ist im Querschnitt etwa parallelogrammförmig und liegt mit einer zur Freifläche 9 etwa parallelen Anlagefläche 15 an der Anlagefläche 12 des Grundkörpers an sowie mit einer Formschlussfläche 16 an der Hinterschneidungsfläche 13 der Schwalbenschwanznut 14 an. Die Formschlussfläche 16 bildet zusammen mit der Anlagefläche 15 am Messereinsatz 4 einen der Schneidkante 6 etwa gegenüberliegenden, spitzwinkeligen Formschlusskeil 17, der in die Schwalbenschwanznut 14 eingreift. Der Formschlusskeil 17 kann selbstverständlich einen anderen Keilwinkel aufweisen als der Schneidkeil 8, ein Winkel zwischen 45° und 80°, beispielsweise 60° hat sich jedoch als vorteilhaft erwiesen. Der Querschnitt des Messereinsatzes 4 muss nicht parallelogrammförmig sein, wie dargestellt, sondern kann selbstverständlich auch eine davon abweichende Kontur aufweisen, wenn der Sitz 11 im Grundkörper 3 entsprechend ausgeführt ist.

Der im Sitz 11 eingesetzte Messereinsatz 4 ist mit dem Grundkörper 3 weiters durch ein Steckverbindungselement 5 verbunden, der in einer Bohrung 18 im Grundkörper 3 und einer mit dieser fluchtenden Bohrung 19 im Messereinsatz 4 angeordnet ist. Im dargestellten Ausführungsbeispiel ist die Mittelachse 20 des Steckverbindungselements 5 rechtwinkelig zur Freifläche 9 orientiert, kann jedoch auch eine davon abweichende Orientierung aufweisen. Zur Erzielung eines gesicherten Formschlusses des Messereinsatzes 4 im Grundkörper 3 ist es jedoch von Bedeutung, dass die Mittelachse 20 des Steckverbindungselements 5 um einen Winkel von zumindest 20° von der Richtung der Hinterschneidungsfläche 13 verschieden ist.

Das Steckverbindungselement 5 ist in den Bohrungen 18 und 19 durch einen Presssitz fixiert, wozu das Steckverbindungselement 5 im unmontierten Zustand einen geringfügig größeren Durchmesser aufweist als die Bohrungen 18 bzw. 19. Das Steckverbindungselement 5 ist im dargestellten Ausführungsbeispiel als Spannstift 21 ausgeführt, der die Form eines hohlen, längsgeschlitzten Stiftes aufweist. Durch den Längsschlitz besitzt er in radialer Richtung eine gewisse Elastizität, die das Einpressen in die Bohrungen 18, 19 erleichtert bzw. zulässt, auch wenn die Mittelachsen der Bohrungen aufgrund von Herstelltoleranzen nicht genau fluchten.

Das Einpressen des Steckverbindungselements 5 erfolgt vorzugsweise von der Rückseite 22 des Schermessers 2, wozu die Bohrung 18 den Grundkörper 3 von der Rückseite 22 bis zum Sitz 11 bzw. zur Anlagefläche 12 vollständig durchsetzt. Um eine leichte Demontage des eingesetzten Steckverbindungselements 5 zu ermöglichen, durchsetzt die Bohrung 19 den Messereinsatz 4 vollständig, wodurch das Steckverbindungselement 5 leicht wieder ausgetrieben werden kann.

Die Mittelachse 20 des Steckverbindungselements 5 weicht von der Richtung 23 der Hinterschneidungsfläche 13 um einen Winkel 24 ab, der vorzugsweise zumindest 10°, z.B. etwa 30° beträgt.

Fig. 2 zeigt einen Querschnitt durch den Messereinsatz 4 im Bereich des Mittelteils 25 zwischen den Steckverbindungselementen 5. In Fig. 3 ist dargestellt, dass die zusätzlich oder alternativ die Endabschnitte 26 des Messereinsatzes 4 Formschlussflächen 27 aufweisen können, die mit Hinterschneidungsflächen 28 am Grundkörper 3 zusammenwirken. Die Endabschnitte 26 bzw. Stirnenden des Messereinsatzes 4 besitzen dadurch einen Formschluss in Richtung quer zur Freifläche 9 der im dargestellten Ausführungsbeispiel wie auch im Beispiel gemäß Fig. 2 durch Zusammenwirken eines Formschlusskeils 17 mit einer Schwalbenschwanznut 14 bewirkt wird. Vorzugsweise besitzen die Hinterschneidungsflächen 28 für die Endabschnitte 26 im Querschnitt dasselbe Profil wie die Hinterschneidungsflächen 13 für den Mittelteil 25 des Messereinsatzes 4, wodurch der Sitz 11 im Grundkörper 3 in einer einzigen Aufspannung mit einem einzigen Fräser hergestellt werden kann. Der Übergang zwischen der Rückseite 7 des Messereinsatzes 4 und dessen Stirnenden ist in diesem Fall abgerundet.

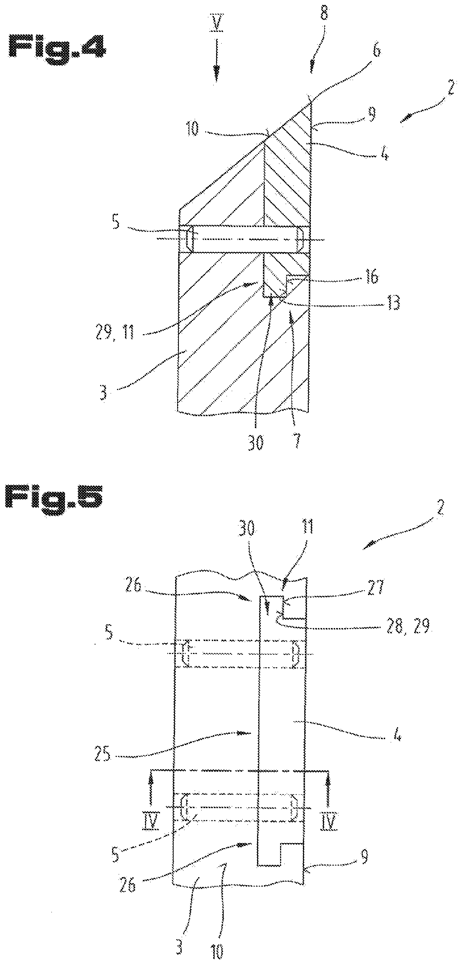

In den Fig. 4 und 5 ist eine weitere und gegebenenfalls für sich eigenständige Ausführungsform des Schermessers 2 gezeigt, wobei wiederum für gleiche Teile gleiche Bezugszeichen bzw. Bauteilbezeichnungen wie in den vorangegangenen Fig. 1 bis 3 verwendet werden. Um unnötige Wiederholungen zu vermeiden, wird auf die detaillierte Beschreibung in den vorangegangenen Fig. 1 bis 3 hingewiesen bzw. Bezug genommen.

Die Ausführungsform des Schermessers 2 gemäß Fig. 4 und 5 ist ähnlich der in den Fig. 2 bzw. 3 gezeigten Ausführungsform und besitzt auch hier der Messereinsatz 4 einen Formschluss im Grundkörper 3 quer zur Freifläche 9. Der Sitz 11 am Grundkörper 3 weist zu diesem Zweck eine halbe T-Nut 29 auf, in die bei eingesetztem Messereinsatz 4 ein Falzansatz 30 eingreift. Dabei bildet die T-Nut 29 die Hinterschneidungsfläche 13 aus, die von der Formschlussfläche 16 des in Eingriff befindlichen Falzansatzes 30 hintergriffen wird. Hinterschneidungsfläche 13 und Formschlussfläche 16 sind im Ausführungsbeispiel gemäß Fig. 4 parallel zur Freifläche 9 ausgeführt, können selbstverständlich aber auch davon abweichende Winkel aufweisen. Von Vorteil ist es, wenn wie in Fig. 5 ersichtlich, auch an den Endabschnitten 26 des Messereinsatzes 4 ein Formschluss im Grundkörper 3 hergestellt ist und der Messereinsatz 4 nicht nur an seiner Rückseite 7, sondern auch an seinen Stirnflächen der Endabschnitte 26 im Grundkörper 3 formschlüssig gesichert ist. Fig. 5 zeigt, dass die an den Stirnseiten des Messereinsatzes 4 wirksamen Formschlussflächen 27 bzw. der Sitz 11 mit der Hinterschneidungsfläche 28 im Grundkörper 3 denselben Querschnitt aufweisen können, wie der in Fig. 4 dargestellte Querschnitt mit Formschlussfläche 16 bzw. Hinterschneidungsfläche 13 im Mittelteil 25 des Messereinsatzes 4, wodurch eine Fräsung des Sitzes 11 in einer einzigen Aufspannung möglich ist.

Der Formschluss des Messereinsatzes 4 im Grundkörper 3 quer zur Freifläche 9 ist vorzugsweise sowohl an der Rückseite 7 als auch an den Endabschnitten 26 bzw. deren in Richtung der Schneidkante distanzierten Stirnflächen gegeben, es ist jedoch auch möglich, dass der Formschluss nur an den Endabschnitten 26 oder nur an der Rückseite 7 des Messereinsatzes 4 vorgesehen ist.

Wenn sowohl an der Rückseite 7 als auch an den Endabschnitten 26 ein derartiger Formschluss vorgesehen ist, ist es wie bereits erwähnt von Vorteil, wenn die dabei wirksamen Hinterschneidungsflächen 13, 28 am Sitz 11 dasselbe Querschnittprofil aufweisen, es ist jedoch auch möglich, dass an der Rückseite 7 ein anderer Querschnitt für den Sitz 11 gewählt wird als an den Endabschnitten 26.

Die Fig. 4 und 5 können demnach, entsprechend wie Fig. 2 und 3, auch als unterschiedliche Ausführungsformen betrachtet werden, wenn sich der Formschluss entweder nur auf die Rückseite 7 beschränkt oder nur auf die Endabschnitte 26 beschränkt.

Die Fixierung des Messereinsatzes im Sitz 11 erfolgt wieder durch ein Steckverbindungselement 5, das quer zur Freifläche 9 orientiert ist. Das Steckverbindungselement 5 kann, wie bereits zuvor erwähnt, durch einen Spannstift 21 gebildet sein, kann jedoch auch wie dargestellt, durch einen einfachen Zylinderstift, einen Spiralspannstift, einen Kerbstift oder ähnliche Verbindungselemente ohne Gewinde gebildet sein.

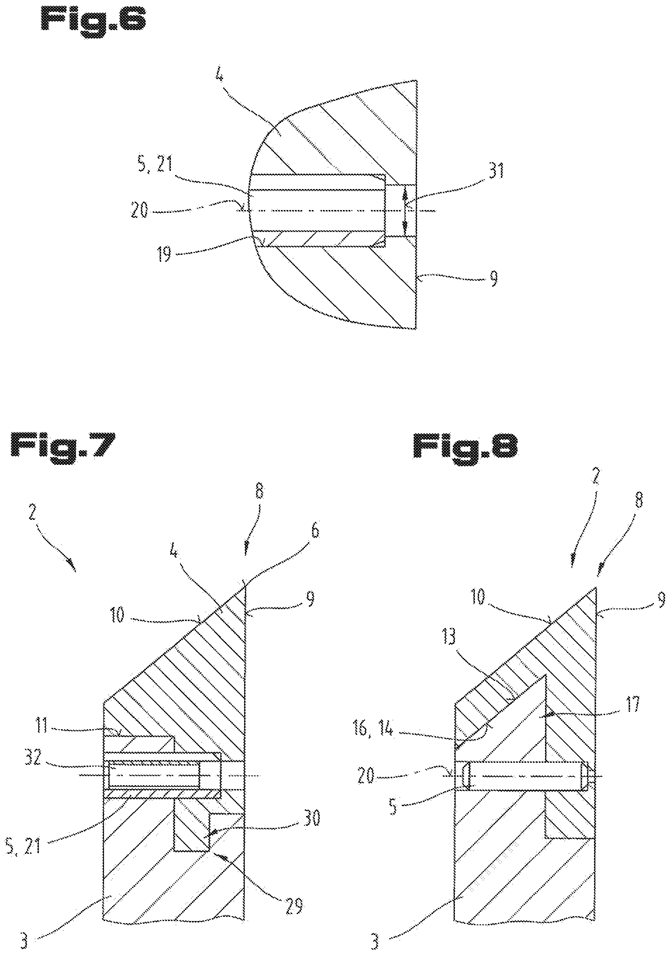

Fig. 6 zeigt einen Detailausschnitt des in der Bohrung 19 im Messereinsatz 4 eingesetzten Steckverbindungselements 5, das beispielsweise durch einen Spannstift 21 gebildet ist. Um zu verhindern, dass das Steckverbindungselement 5 im Laufe des Gebrauchs durch die Bohrung 19 an der Freifläche 9 austreten kann, ist es bei allen zuvor beschriebenen Ausführungen auch möglich, dass im Bereich der Freifläche 9 die Bohrung 19 einen stufenförmig abgesetzten, kleineren Durchmesser 31 als die Bohrung 19 aufweist, wobei der Durchmesserunterschied so gewählt ist, dass ein Austreten des Steckverbindungselements 5 an der Freifläche 9 zuverlässig verhindert ist, jedoch ein Austreiben des Steckverbindungselements 5 von der Freifläche 9 her möglich ist und dadurch der Messereinsatz 4 leicht gewechselt werden kann. Alternativ zur dargestellten Durchmesserverringerung ist es auch möglich, dass im Bereich der Freifläche 9 eine zur Bohrung 19 geringfügig versetzte Öffnung vorgesehen ist, wodurch ebenfalls ein Austreten des Steckverbindungselements 5 verhindert wird, ein Auspressen des Stiftes jedoch noch möglich ist.

Fig. 7 zeigt eine weitere mögliche Ausführungsform eines Schermessers 2 mit einem Formschluss des Messereinsatzes 4 quer zur Freifläche 9. Der Sitz 11 erstreckt sich bei diesem Ausführungsbeispiel über die gesamte Dicke des Grundkörpers 3 und besitzt der Messereinsatz 4 dieselbe Dicke wie der Grundkörper 3. Der Formschluss ist hier durch eine halbe T-Nut 29 am Grundkörper 3 sowie einen Falzansatz 30 am Messereinsatz 4 hergestellt, und wird diesbezüglich auf die Beschreibung der Fig. 4 und 5 verwiesen. Das Steckverbindungselement 5 in Form eines Spannstiftes 21 kann wie in Fig. 7 dargestellt, durch ein weiteres Steckverbindungselement 32 verstärkt sein, das nachträglich in den bereits eingesetzten Spannstift 21 eingetrieben wird. Auf diese Weise kann die Fixierung des Messereinsatzes am Grundkörper weiter verbessert werden, in dem die für die Montage vorteilhafte Flexibilität des Spannstiftes 21 nachträglich durch das in dessen hohle Innere eingetriebene Steckverbindungselement 32 reduziert wird.

Fig. 8 zeigt ein weiteres Ausführungsbeispiel eines Schermessers 2, bei dem der Messereinsatz 4 eine flächenbündige Fortsetzung des Grundkörpers 3 bildet und der Formschluss durch eine halbe Schwalbenschwanznut 14 am Messereinsatz und einen Formschlusskeil 17 am Grundkörper hergestellt wird. Die Sicherung des aufgesetzten Messereinsatzes 4 erfolgt durch ein Steckverbindungselement 5, das gemäß allen vorbeschriebenen Ausführungsvarianten ausgebildet sein kann. Das Steckverbindungselement 5 bzw. dessen Mittelachse 20 besitzt in diesem Ausführungsbeispiel einen größeren Abstand zur Schneidkante 6, als die Formschlussfläche 16 bzw. die Hinterschneidungsfläche 13, wodurch sich bei einer in Fig. 8 nach rechts gerichteten Kraft auf den Schneidkeil 8 ein gutes Abstützmoment für den Messereinsatz 4 ergibt und die Zugbelastung auf das Steckverbindungselement 5 noch weiter verringert ist.

Der Ordnung halber sei abschließend darauf hingewiesen, dass zum besseren Verständnis des Aufbaus des Schermessers dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

**Bezugszeichenaufstellung**

| | | | |
|---|---|---|---|
| 1 | Schneidgerät | 26 | Endabschnitt |
| 2 | Schermesser | 27 | Formschlussfläche |
| 3 | Grundkörper | 28 | Hinterschneidungsfläche |
| 4 | Messereinsatz | 29 | T-Nut |
| 5 | Steckverbindungselement | 30 | Falzansatz |
| | | | |
| 6 | Schneidkante | 31 | Durchmesser |
| 7 | Rückseite | 32 | Steckverbindungselement |
| 8 | Schneidkeil | | |
| 9 | Freifläche | | |
| 10 | Druckfläche | | |
| | | | |
| 11 | Sitz | | |
| 12 | Anlagefläche | | |
| 13 | Hinterschneidungsfläche | | |
| 14 | Schwalbenschwanznut | | |
| 15 | Anlagefläche | | |
| | | | |
| 16 | Formschlussfläche | | |
| 17 | Formschlusskeil | | |
| 18 | Bohrung | | |
| 19 | Bohrung | | |
| 20 | Mittelachse | | |
| | | | |
| 21 | Spannstift | | |
| 22 | Rückseite | | |
| 23 | Richtung | | |
| 24 | Winkel | | |
| 25 | Mittelteil | | |

## Patentansprüche

1. Schermesser (2) für ein Schneidgerät (1), umfassend einen Grundkörper (3) mit einem Sitz (11) und einen am Sitz (11) angeordneten, einen Schneidkeil (8) bildenden Messereinsatz (4), wobei der Schneidkeil (8) durch eine Freifläche (9) und eine dazu winkelige Druckfläche (10) eine Schneidkante (6) bildet, wobei der Sitz (11) in Richtung quer zur Freifläche (9) wirksame Hinterschneidungsflächen (13, 28) aufweist, die bei eingesetztem Messereinsatz (4) mit an diesem ausgebildeten Formschlussflächen (16, 27) zusammenwirken und dabei ein quer zur Freifläche (9) wirkender Formschluss hergestellt ist, wobei Formschlussflächen (16) im Mittelteil (25) und Formschlussflächen (27) an Stirnflächen an Endabschnitten (26) des Messereinsatzes (4) angeordnet sind und mit Hinterschneidungsflächen (13, 28) im Grundkörper (3) zusammenwirken, wobei Hinterschneidungsflächen (28) für die Endabschnitte (26) des Messereinsatzes (4) und Hinterschneidungsflächen (13) für den Mittelteil (25) des Messereinsatzes (4) im Querschnitt dasselbe Profil aufweisen, **dadurch gekennzeichnet, dass** der Messereinsatz (4) mittels zumindest eines quer zur Freifläche (9) orientierten, in fluchtenden Bohrungen (18, 19) im Grundkörper (3) und im Messereinsatz (4) angeordneten stiftförmigen Steckverbindungselements (5) am Grundkörper (3) befestigt ist.

2. Schermesser (2) nach Anspruch 1 **dadurch gekennzeichnet, dass** die Hinterschneidungsfläche (13, 28) durch eine halbe Schwalbenschwanznut (14) im Grundkörper (3) gebildet ist und der eingesetzte Messereinsatz (4) einen parallelogrammähnlichen Querschnitt besitzt und die Hinterschneidungsfläche (13, 28) zusammen mit einer zur Freifläche (9) etwa parallelen Anlagefläche (15) einen der Schneidkante (6) gegenüberliegenden, spitzwinkeligen Formschlusskeil (17) bildet, der in die Schwalbenschwanznut (14) eingreift und dabei die Hinterschneidungsfläche (13, 28) hintergreift.

3. Schermesser (2) nach Anspruch 2, **dadurch gekennzeichnet, dass** der Formschlusskeil (17) einen Keilwinkel zwischen 45° und 75° aufweist.

4. Schermesser (2) nach Anspruch 1, **dadurch gekennzeichnet, dass** die Hinterschneidungsfläche (13, 28) durch eine halbe T-Nut (29) im Grundkörper (3) gebildet ist und die Formschlussfläche (16, 27) am Messereinsatz (4) durch einen die T-Nut (29) hintergreifenden Falzansatz (30) gebildet ist.

5. Schermesser (2) nach einem der vorhergehenden Ansprüche, **dadurch gekennzeichnet, dass** sich die Bohrung (19) zur Aufnahme des Steckverbindungselements (5) im Messereinsatz (4) bis zur Freifläche (9) erstreckt.

6. Schermesser (2) nach Anspruch 5,**dadurch gekennzeichnet, dass** die Bohrung (19) im Messereinsatz (4) im Bereich der Freifläche (9) einen reduzierten Querschnitt oder einen kleineren stufenförmig abgesetzten Durchmesser (31) aufweist.

7. Schermesser (2) nach einem der vorhergehenden Ansprüche, **dadurch gekennzeichnet, dass** das Steckverbindungselement (5) durch einen Spannstift (21) in Form eines hohlen, längsgeschlitzten Stifts, einen Spiralspannstift, einen Kerbstift, oder einen Zylinderstift gebildet ist.

8. Schermesser (2) nach einem der vorhergehenden Ansprüche, **dadurch gekennzeichnet, dass** der Spannstift (21) oder ein sonstiges hohles Steckverbindungselement (5) durch ein in seinem hohlen Inneren eingesetztes weiteres Steckverbindungselement (32) verstärkt ist.

9. Schermesser (2) nach einem der vorhergehenden Ansprüche, **dadurch gekennzeichnet, dass** die Mittelachse (20) des Steckverbindungselements (5) rechtwinkelig zur Freifläche (9) orientiert ist.

10. Schermesser (2) nach einem der vorhergehenden Ansprüche, **dadurch gekennzeichnet, dass** der Sitz (11) am Grundkörper (3) für die Rückseite (7) des Messereinsatzes (4) im Wesentlichen aus ebenen Flächen gebildet ist.

11. Schermesser (2) nach einem der vorhergehenden Ansprüche, **dadurch gekennzeichnet, dass** sich die Richtung der Mittelachse (20) des Steckverbindungselements (5) um einen Winkel (24) von zumindest 10° von der Richtung (23) der Hinterschneidungsfläche (13, 28) unterscheidet.

## Claims

1. A shearing blade (2) for a cutting device (1), comprising a main body (3) that has a seat (11) and a blade insert (4) that is arranged on the seat (11) and forms a cutting wedge (8), wherein the cutting wedge (8) forms a cutting edge (6) by means of a flank face (9) and a pressure face (10) at an angle to the flank face (9), the seat (11) having undercut faces (13, 28) that act in a direction transverse to the flank face (9), which undercut faces (13, 28), when the blade insert (4) is inserted, interact with form-closure faces (16, 27) formed on the blade insert (4) and thereby a form closure taking effect transversely to the flank face (9), wherein form-closure faces (16) are arranged in the middle part (25) and form-closure faces (27) are arranged on end faces on end sections (26) of the blade insert (4) and interact with undercut faces (13, 28) in the main body (3), wherein undercut faces (28) for the end sections (26) of the blade insert (4) and undercut faces (13) for the middle part (25) of the blade insert (4) have the same profile in cross-section, **characterized in that** the blade insert (4) is fastened to the main body (3) by means of at least one pin-shaped plug-in connection element (5), which is oriented transverse to the flank face (9) and which is arranged in aligned holes (18, 19) in the main body (3) and in the blade insert (4).

2. The shearing blade (2) according to claim 1, **characterized in that** the undercut face (13, 28) is formed by a half dovetail groove (14) in the main body (3) and the inserted blade insert (4) has a parallelogram-like cross-section and the undercut face (13, 28) together with a bearing face (15) approximately parallel to the flank face (9) forms an acute-angled form-closure wedge (17) opposite the cutting edge (6), which form-closure wedge engages in the dovetail groove (14) and thereby engages behind the undercut face (13,28).

3. The shearing blade (2) according to claim 2, **characterized in that** the form-closure wedge (17) has a wedge angle of between 45° and 75°.

4. The shearing blade (2) according to claim 1, **characterized in that** the undercut face (13, 28) is formed by a half T-groove (29) in the main body (3) and the form-closure face (16, 27) on the blade insert (4) is formed by a rebated joint (30) engaging behind the T-groove (29).

5. The shearing blade (2) according to any one of the preceding claims, **characterized in that** the hole (19) extends up to the flank face (9) for receiving the plug-in connection element (5) in the blade insert (4).

6. The shearing blade (2) according to claim 5, **characterized in that** the hole (19) in the blade insert (4) has a reduced cross-section or a smaller step-like reduced diameter (31) in the region of the flank face (9).

7. The shearing blade (2) according to any one of the preceding claims, **characterized in that** the plug-in connection element (5) is formed by a dowel pin (21) in the form of a hollow, longitudinally slotted pin, a spiral dowel pin, a grooved pin or a cylindrical pin.

8. The shearing blade (2) according to any one of the preceding claims, **characterized in that** the dowel pin (21) or other hollow plug-in connection element (5) is strengthened by a further plug-in connection element (32) inserted into its hollow interior.

9. The shearing blade (2) according to any one of the preceding claims, **characterized in that** the central axis (20) of the plug-in connection element (5) is oriented at right angles to the flank face (9).

10. The shearing blade (2) according to any one of the preceding claims, **characterized in that** the seat (11) on the main body (3) for the rear side (7) of the blade insert (4) is formed substantially by flat surfaces.

11. The shearing blade (2) according to any one of the preceding claims, **characterized in that** the direction of the central axis (20) of the plug-in connection element (5) differs by an angle (24) of at least 10° from the direction (23) of the undercut face (13, 28).

## Revendications

1. Lame de cisaillement (2) pour un dispositif de coupe (1), comprenant un corps de base (3) doté d'un siège (11) et un insert de lame (4) disposé sur le siège (11) et formant une cale de coupe (8), dans laquelle la cale de coupe (8) forme un bord de coupe (6) par l'intermédiaire d'une surface libre (9) et d'une surface de pression (10) angulaire par rapport à celle-ci, dans laquelle le siège (11) comprend des surfaces de contre-dépouille (13, 28) agissant dans une direction transversale à la surface libre (9), qui coopèrent, lorsque l'insert de lame (4) est inséré, avec au moins une surface à complémentarité de forme (16, 27) formée sur celui-ci, en mettant ainsi en oeuvre une complémentarité de forme opérant transversalement à la surface libre (9), dans laquelle des surfaces à complémentarité de forme (16) sont agencées dans la partie médiane (25) et des surfaces à complémentarité de forme (27) sont agencées sur la surface avant au niveau d'un tronçon d'extrémité (26) de l'insert de lame (4), et coopèrent avec les surfaces de contre-dépouille (13, 28) dans le corps de base (3), dans laquelle les surfaces de contre-dépouille (28) pour le tronçon d'extrémité (26) de l'insert de lame (4) et des surfaces de contre-dépouille (13) pour la partie médiane (25) de l'insert de lame (4) présentent le même profil en coupe transversale, caractérisée en ce l'insert de lame (4) est fixé sur le corps de base (3) au moyen d'au moins un élément d'assemblage par emboîtement (5) en forme de tige orienté transversalement à la surface libre (9) et disposé dans des alésages alignés (18, 19) dans le corps de base (3) et dans l'insert de lame (4).

2. Lame de cisaillement (2) selon la revendication 1 , **caractérisée en ce que** la surface de contre-dépouille (13, 28) est formée d'une demi-rainure en queue d'aronde (14) dans le corps de base (3), et l'insert de lame (4) inséré présente une section transversale en forme de parallélogramme, et la surface de contre-dépouille (13, 28), ensemble avec une surface d'appui (15) approximativement parallèle à la surface libre (9), forme une cale à complémentarité de forme (17) opposée au bord de coupe (6), qui vient en prise dans la rainure en queue d'aronde (14), et ainsi vient en prise par derrière avec la surface en contre-dépouille (13, 28).

3. Lame de cisaillement (2) selon la revendication 2, **caractérisée en ce que** la cale à complémentarité de forme (17) présente un angle de cale compris entre 45° et 75°.

4. Lame de cisaillement (2) selon la revendication 1, **caractérisée en ce que** la surface de contre-dépouille (13, 28) est formée par une demi-rainure en T (29) dans le corps de base (3), et la surface à complémentarité de forme (16, 27) sur l'insert de lame (4) est formée par un appendice de repli (30) venant en prise par derrière avec la rainure en T (29).

5. Lame de cisaillement (2) selon l'une quelconque des revendications précédentes, **caractérisée en ce que** l'alésage (19) destiné à recevoir l'élément d'assemblage par emboîtement (5) dans l'insert de lame (4) s'étend jusqu'à la surface libre (9).

6. Lame de cisaillement (2) selon la revendication 5, **caractérisée en ce que** l'alésage (19) dans l'insert de lame (4) présente une section transversale réduite dans la zone de la surface libre (9) ou un diamètre (31) devenant plus petit de manière étagée.

7. Lame de cisaillement (2) selon l'une quelconque des revendications précédentes, **caractérisée en ce que** l'élément d'assemblage par emboîtement (5) est formé par une goupille de serrage (21) sous la forme d'une goupille fendue longitudinalement, d'une goupille en spirale, d'une goupille cannelée ou d'une goupille cylindrique.

8. Lame de cisaillement (2) selon l'une quelconque des revendications précédentes, **caractérisée en ce que** la goupille de serrage (21) ou un autre élément d'assemblage par emboîtement (5) creux est renforcé par un élément d'assemblage par emboîtement (32) supplémentaire inséré dans son intérieur creux.

9. Lame de cisaillement (2) selon l'une quelconque des revendications précédentes, **caractérisée en ce que** l'axe central (20) de l'élément d'assemblage par emboîtement (5) est orienté perpendiculairement par rapport à la surface libre (9).

10. Lame de cisaillement (2) selon l'une quelconque des revendications précédentes, **caractérisée en ce que** le siège (11) sur le corps de base (3) est formé pour le côté arrière (7) de l'insert de lame (4) à partir de surfaces sensiblement planes.

11. Lame de cisaillement (2) selon l'une quelconque des revendications précédentes, **caractérisée en ce que** la direction de l'axe central (20) de l'élément d'assemblage par emboîtement (5) diffère de la direction (23) de la surface de contre-dépouille (13, 28) d'un angle (24) d'au moins 10°.
